# FASCICULE DE BREVET EUROPEEN

(11) **EP 3 558 728 B1**
(45) Date de publication et mention de la délivrance du brevet: **06.01.2021**
(21) Numéro de dépôt: 17835661.4
(22) Date de dépôt: 19.12.2017
(51) Int. Cl.: B60J 1/17

(54) **GUIDAGE DE VITRAGE COULISSANT, EN PARTICULIER AUTOMOBILE**
FÜHRUNG EINER SCHIEBEGLASSCHEIBE, INSBESONDERE FÜR EIN KRAFTFAHRZEUG
GUIDING OF SLIDING GLASS PANEL, PARTICULARLY FOR A MOTOR VEHICLE

(30) Priorité: 21.12.2016 FR 1662984
(43) Date de publication de la demande: 30.10.2019
(73) Titulaire: Hutchinson, 75008 Paris (FR)
(72) Inventeur: BARATIN, Sylvain, 45120 Corquilleroy (FR); SKRABURSKI, Eddy, 45200 Montargis (FR)
(74) Mandataire: Gevers & Orès
(86) Numéro de dépôt international: PCT/EP2017/083489
(87) Numéro de publication internationale: WO 2018/114913

(56) Documents cités:
- EP-A2- 0 083 696
- WO-A1-2014/191812

## Description

### DOMAINE TECHNIQUE

La présente invention concerne notamment un guide de vitrage coulissant, en particulier automobile, ainsi qu'un vitrage coulissant équipé d'un tel guide Le document WO 2014/191812 A1 divulgue un guide selon le préambule de la revendication 1.

### ETAT DE L'ART

Dans le domaine automobile, on a déjà proposé, pour des raisons esthétiques, de guider un vitrage coulissant en affleurement latéral avec une surface externe d'un élément vertical de bordure d'un cadre de porte adjacent au vitrage. Cet élément vertical est en général un montant du cadre ou un enjoliveur externe vertical équipant ce cadre tel qu'un pied-milieu du véhicule. L'affleurement du vitrage par rapport à cet élément vertical est communément appelé « flush » en anglais, car la face extérieure du vitrage se situe sensiblement dans le même plan latéral que celle de cet élément vertical.

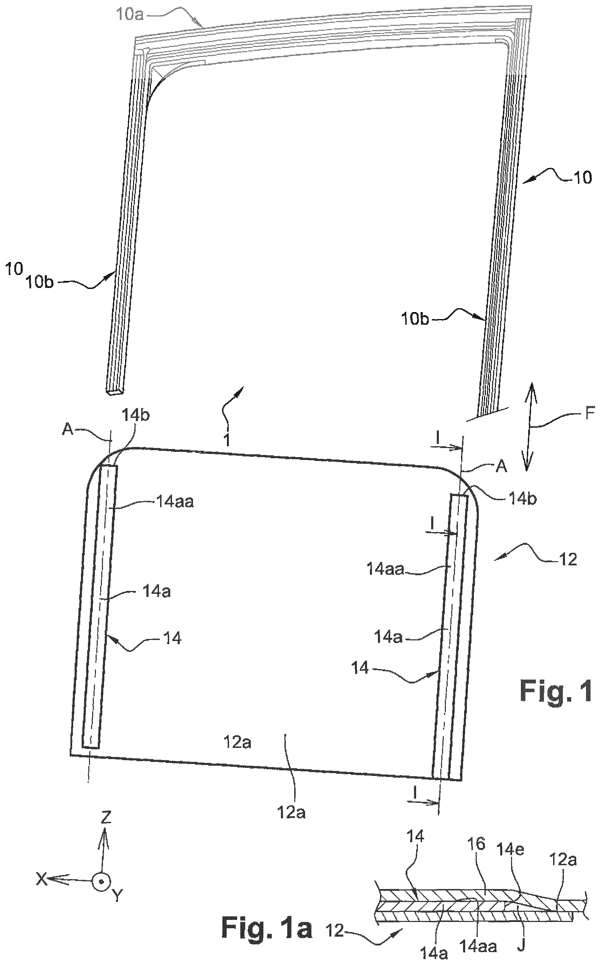

Dans ce qui suit, on utilisera de manière usuelle les qualificatifs « axialement interne » et « axialement externe » pour désigner la position d'une pièce latéralement vers l'intérieur et vers l'extérieur du véhicule automobile, respectivement, en référence à la direction axiale Y qui est par définition perpendiculaire au plan XZ défini par la direction horizontale longitudinale X et par la direction verticale Z du véhicule (voir la figure 1 annexée à la présente description).

Dans un véhicule automobile de ce type, un cadre de porte est équipé d'un joint de coulisse 10 destiné à recevoir le vitrage coulissant 12 (figure 1). Ce vitrage 12 est équipé d'au moins un guide 14 rapporté et fixé sur une surface du vitrage et apte à le guider de manière longitudinalement déportée en coulissement, en direction verticale, directement dans une rainure du joint 10. Le joint de coulisse 10 comprend en général deux brins ascendants 10b reliés entre eux par un brin supérieur 10a. Un ou chaque brin ascendant présente une section transversale sensiblement en forme de U qui comprend deux branches axialement interne et externe reliées entre elles par une branche de liaison axiale, et qui reçoit le vitrage en affleurement latéral avec le montant du cadre de la porte correspondante ou avec l'enjoliveur vertical équipant ce cadre (avec dans certains cas ce cadre qui est masqué par le vitrage).

Un guide de vitrage 14 a en général un corps de forme allongée et présentant une embase s'étendant le long de l'axe d'allongement A du corps. Une face de cette embase est destinée à être appliquée et fixée sur une surface du vitrage 12a, par exemple interne.

Dans certaines configurations, le guide 14 peut coopérer par glissement avec le joint de coulisse, et en particulier avec une lèvre flexible d'étanchéité de ce joint de coulisse. La lèvre peut être en contact avec une face 14aa de l'embase 14a, opposée à la face précitée appliquée sur la surface de vitrage 12a, et peut coulisser sur celle-ci lors des déplacements du vitrage, qui sont schématiquement représentés par la double flèche F. La lèvre est ainsi destinée à coulisser sur la face 14aa, dans une direction parallèle à l'axe A d'allongement du corps du guide, sur sensiblement toute la longueur du guide.

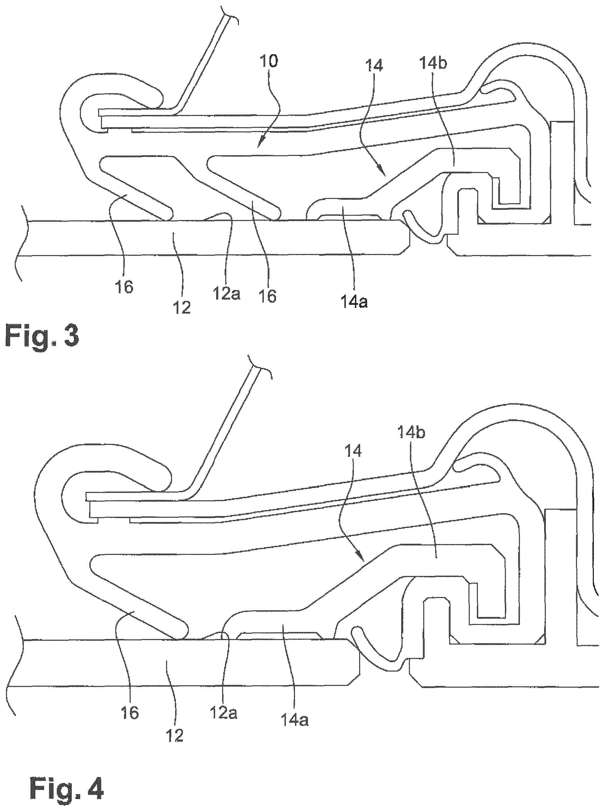

Cependant, dans la technique actuelle schématiquement représentée à la figure 1a, lorsque le vitrage 12 coulisse ou est arrêté dans une position verticale donnée dans le joint de coulisse 10, une portion de la lèvre 16 du joint de coulisse s'étend sensiblement au-dessus d'une extrémité longitudinale libre, en particulier supérieure 14e du guide 14, et est séparée de la surface de vitrage 12a par un jeu J (figure 1a). Ce jeu J n'est pas satisfaisant car il permet le passage d'air et donc ne garantit pas une étanchéité parfaite autour du vitrage. Ce jeu est dû à l'épaisseur de l'embase longitudinale 14a du guide 14 qui est appliquée sur la surface du vitrage 12a, qui est significative et entraîne une « marche » que la lèvre 16 doit franchir pour coulisser entre le guide 14 et la surface de vitrage 12a, et inversement. Cet inconvénient mène aujourd'hui à éviter de faire coopérer la lèvre du joint directement avec le guide. La lèvre 16 coopère plutôt directement avec la surface de vitrage 12a, comme cela est visible aux figures 3 et 4. Ceci a pour conséquence négative un surdimensionnement axial du joint de coulisse qui doit enjamber le guide de façon à ce qu'au moins une de ses lèvres 16 puisse être située au-delà du guide pour coopérer avec la surface de vitrage.

La demande antérieure EP-A1-3 102 448 de la Demanderesse propose une solution ou l'une des lèvres du joint de coulisse coopère avec une jambe axiale 14b du guide, mais cela implique également une « marche » importante pour glisser du guide jusqu'à la surface de vitrage 12a.

L'invention propose une solution simple, efficace et économique à ces problèmes.

### EXPOSE DE L'INVENTION

L'invention propose à cet effet un guide de vitrage coulissant, en particulier pour automobile, ledit guide étant destiné à être rapporté et fixé sur un vitrage et à coopérer avec un joint de coulisse, ledit guide comportant un corps de forme allongée et présentant une embase longitudinale s'étendant le long de l'axe d'allongement du corps et dont une première face est destinée à être appliquée et fixée sur une surface de vitrage et une seconde face opposée est destinée à coopérer par glissement avec ledit joint, caractérisé en ce que ladite embase comporte à au moins une extrémité longitudinale libre une portion amincie dont l'épaisseur, dans une direction sensiblement perpendiculaire à ladite première face, décroît au moins en direction longitudinale de façon à ce que ladite seconde face affleure ladite surface de vitrage au niveau de ladite au moins une extrémité libre.

Le guide ainsi défini permet une coopération de la lèvre du joint de coulisse sur l'embase longitudinale du guide, et non sur sa jambe. L'effet est que la « marche » à compenser via la portion amincie est minorée. De plus, la forme du guide et ce contact sur l'embase plutôt que sur la jambe permet également de réduire l'épaisseur et la largeur du guide, et donc de gagner en compacité sur le système d'étanchéité complet (dimension du guide et du joint de coulisse).

Le guide selon l'invention peut comprendre une ou plusieurs des caractéristiques suivantes, prises isolément les unes des autres ou en combinaison les unes avec les autres :
- ladite portion amincie a une épaisseur qui décroît depuis une épaisseur E1 sensiblement égale à l'épaisseur maximale de ladite embase, jusqu'à une épaisseur E2,
- E1 est comprise entre 1 et 5mm, et de préférence entre 2 et 3mm,
- E2 est inférieure à E1/5, et de préférence à E1/10,
- E2 est comprise entre 0,01 et 1mm, et de préférence entre 0,01 et 0,5mm,
- ladite portion a une dimension longitudinale représentant entre 1 et 10%, et de préférence entre 2 et 5%, de la dimension longitudinale totale dudit corps,
- ladite portion amincie a une largeur qui décroît en direction longitudinale de façon à ce que ladite extrémité libre ait une largeur plus faible que la largeur maximale du corps et/ou de ladite embase,
- ladite portion amincie a une épaisseur qui décroît également en direction transversale,
- ladite partie amincie comprend une unique surface de raccordement de ladite seconde face à ladite surface de vitrage ; on entend ici par « surface unique de raccordement », une surface dépourvue d'arête vive et donc lisse ou sans discontinuité,
- ladite surface de raccordement a en section longitudinale une forme légèrement incurvée convexe,
- ladite surface de raccordement comprend une première extrémité longitudinale définissant ladite extrémité libre, et une seconde extrémité longitudinale raccordée à ladite seconde face,
- l'angle α formé dans un plan longitudinal sensiblement perpendiculaire à ladite première face, entre ladite surface de vitrage et une tangente à ladite surface de raccordement au niveau de ladite première extrémité longitudinale, étant compris entre 150 et 180°, et/ou
- l'angle β formé dans le même plan entre ladite seconde face et une tangente à ladite surface de raccordement au niveau de ladite seconde extrémité longitudinale, étant compris entre 180 et 210°,
- ledit corps comprend en outre une jambe longitudinale reliée à ladite embase et destinée à s'étendre à distance dudit vitrage,
- ladite jambe s'étend sur une partie seulement de la dimension longitudinale de ladite embase,
- ladite portion amincie est écartée longitudinalement de ladite jambe,
- ladite jambe comprend au moins un crochet de retenue,
- ledit corps est formé d'une seule pièce,

L'invention concerne également un vitrage coulissant équipé, en particulier automobile, comportant un vitrage et au moins un guide tel que décrit ci-dessus.

Ledit guide peut être solidarisé au vitrage par collage ou surmoulage.

Ledit guide peut être fixé sur une surface sérigraphiée dudit vitrage.

La présente invention concerne encore un ensemble comportant un vitrage coulissant équipé tel que décrit ci-dessus et un joint de coulisse, ledit joint comportant une lèvre flexible de forme allongée dont l'axe d'allongement s'étend sensiblement parallèlement audit axe d'allongement dudit corps, ladite lèvre étant en appui sur ladite seconde face et apte à glisser en direction longitudinale sur ladite seconde face ainsi que sur ladite surface de vitrage en maintenant un contact sensiblement continu avec celles-ci.

La présente invention concerne encore un module comportant un ensemble tel que décrit ci-dessus et un enjoliveur d'un cadre de porte de véhicule automobile, ledit enjoliveur comportant une face externe destinée à être sensiblement alignée avec une face externe du vitrage Avantageusement, ledit enjoliveur comporte deux rebords orientés vers l'intérieur et sensiblement perpendiculaires à ladite face externe, dont un premier rebord est engagé dans une rainure d'une branche externe du joint de coulisse et dont un second rebord sert d'appui à une branche intermédiaire du joint de coulisse.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en perspective d'un joint de coulisse et d'un vitrage coulissant équipé, pour une porte de véhicule automobile,
- la figure 1a est une vue schématique en coupe des éléments de la figure 1, lorsqu'ils sont engagés l'un dans l'autre et coopèrent l'un avec l'autre ; à titre indicatif, la coupe est prise selon la ligne I-I de la figure 1,
- la figure 2 est une autre vue schématique en perspective d'un joint de coulisse et d'un vitrage coulissant équipé, pour une porte de véhicule automobile,
- les figures 3 et 4 sont des vues schématiques en coupe d'ensembles comportant un vitrage coulissant équipé et d'un joint de coulisse, dans leur environnement de montage ; à titre indicatif, la coupe est prise selon la ligne III-III de la figure 2,
- les figures 5 à 7 sont des vues schématiques en coupe de variantes de réalisation d'un ensemble selon l'invention comportant un vitrage coulissant équipé et d'un joint de coulisse, dans leur environnement de montage ; à titre indicatif, la coupe est prise selon la ligne III-III de la figure 2,
- la figure 8 est une vue schématique en perspective du guide visible aux figure 6 et 7,
- les figures 9 à 11 sont des vues schématiques partielles en perspective de l'ensemble de la figure 6 et 7.

### DESCRIPTION DETAILLEE

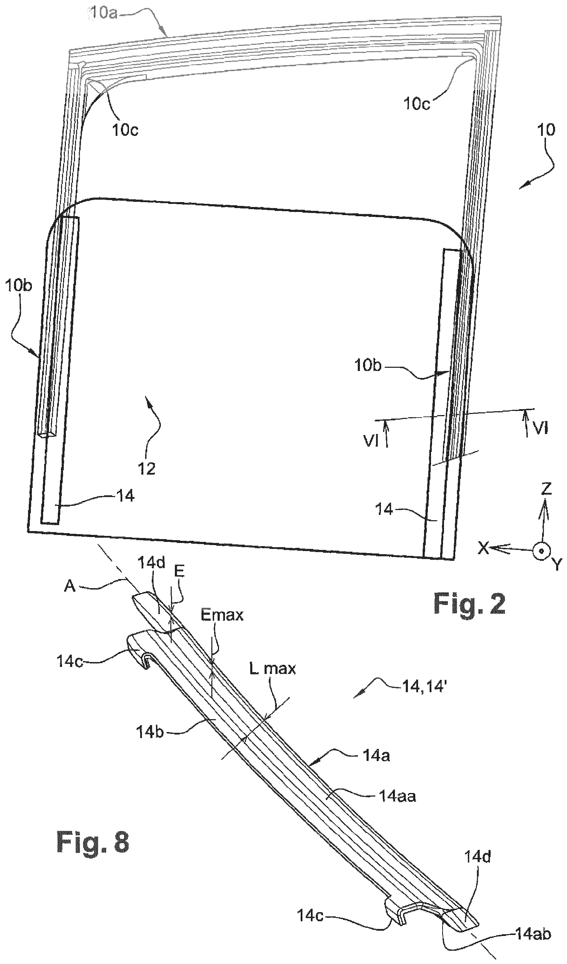

La figure 2 montre un ensemble au sens de l'invention, cet ensemble comprenant un joint de coulisse 10 et un vitrage coulissant équipé 12, pour un véhicule automobile.

Le joint de coulisse 10 est destiné à être monté sur un cadre (non visible) d'une porte avant ou arrière du véhicule automobile pour recevoir le vitrage 12 lors de son coulissement ascendant et descendant dans la direction verticale Z du véhicule.

Le joint de coulisse 10 comprend de manière usuelle :
- un brin supérieur 10a sensiblement horizontal ou incliné s'étendant dans la direction longitudinale X du véhicule, et
- deux brins ascendants 10b raccordés au brin supérieur 10a par exemple par l'intermédiaire de courts raccords moulés 10c.

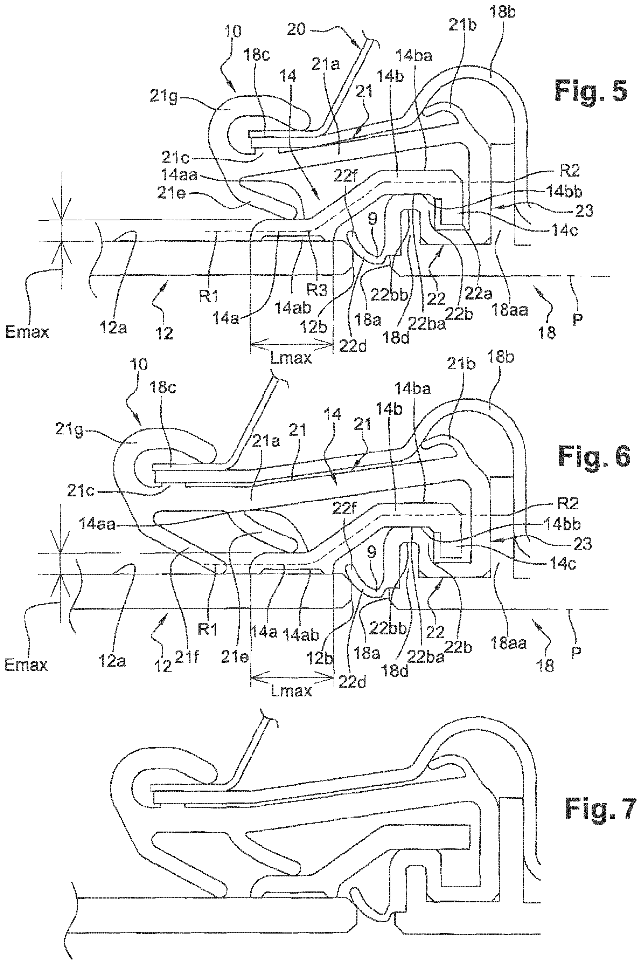

La figure 5 est une vue schématique en coupe selon la ligne III-III de la figure 2, et permet de visualiser :
- le joint de coulisse 10,
- le vitrage 12 monté coulissant dans le joint 10,
- un guide 14 solidaire d'une face interne 12a du vitrage 12 à proximité immédiate d'au moins l'un de ses bords verticaux (i.e. notamment du bord vertical arrière) et apte à guider le vitrage en coulissement dans le joint 10 de manière déportée dans la direction X, et
- un enjoliveur externe vertical 18 du cadre 20 de la porte adjacent au vitrage 12 et formant par exemple un enjoliveur de pied-milieu, avec la surface axialement externe de laquelle le vitrage 12 est monté en affleurement latéral (i.e. dans un même plan P sensiblement vertical, appelé montage « flush » en anglais).

Dans l'exemple de la figure 5, le joint 10 est entièrement réalisé d'un seul tenant en matériaux élastomères de duretés différentes, et il présente globalement une forme de U asymétrique à deux branches axialement interne 21 et externe 22 qui s'étendent chacune sensiblement dans la direction longitudinale X en section transversale et qui sont reliées entre elles par une branche de liaison 23 axiale formant l'âme du U.

La branche interne 21 comprend essentiellement :
- une portion principale rigide 21a (par exemple à base d'un TPV rigide ou d'un caoutchouc) s'étendant sensiblement dans la direction X qui est montée sur une structure interne 18b par exemple en L de l'enjoliveur pied-milieu 18a par des saillies 21b, 21c dirigées axialement vers l'intérieur qu'il présente, dont une saillie déformable interne 21b qui est prévue à la manière d'une articulation à la jonction entre la branche de liaison 23 et la branche interne 21 et qui forme une lèvre d'accrochage à la structure 18b, et
- une lèvre d'étanchéité souple 21e (par exemple à base d'un TPV souple), cette lèvre 21e étant orientée vers l'extérieur et prolongeant de manière oblique (inclinée vers la branche de liaison 23) l'extrémité de la portion principale 21a et étant conçue pour appuyer de manière étanche sur une face 14aa orientée vers l'intérieur du guide 14, étant précisé que la jonction entre la portion principale 21a et la lèvre d'extrémité 21e peut former une saillie 21g à section sensiblement en C, qui est destinée à être appliquée sur une extrémité d'un enjoliveur interne 18c équipant le cadre de porte 20.

La branche de liaison 23 essentiellement rigide (par exemple à base d'un TPV rigide tel que celui de la portion principale 21a de la branche interne 21) s'étend axialement vers l'extérieur à partir de la saillie déformable interne 21b jusqu'à la branche externe 22.

La branche 23 est en outre ici en appui dans la direction X sur un rebord axial interne 18aa de l'enjoliveur 18

La branche externe 22 comprend essentiellement :
- une rainure axiale 22a ouverte sur l'intérieur et dont un bord est formé par la branche de liaison 23 et l'autre bord par un bourrelet rigide 22b s'étendant en saillie axialement vers l'intérieur et dont le sommet 22ba coopère avec une surface externe du guide 14; sur sa face externe, le bourrelet 22b est creusé et comprend une rainure axiale 22bb ouverte donc vers l'extérieur pour le logement d'un rebord interne 18d de l'enjoliveur 18, et

- une lèvre souple d'étanchéité externe 22d (par exemple, comme les lèvres d'étanchéité internes 21e et 21f et la saillie déformable interne 22b, à base d'un TPV souple) qui forme l'extrémité libre de la branche externe 22 à partir du bourrelet rigide 22b et qui comprend :
   * une première portion oblique 22e qui est incurvée axialement vers l'extérieur jusqu'à un sommet externe S arrondi de la lèvre 22d sensiblement situé au repos dans le plan médian du vitrage 12 et de l'enjoliveur 18, et qui est conçue pour être montée de manière étanche au contact d'un bord vertical 18a de l'enjoliveur externe 18, et
   * une seconde portion oblique d'extrémité 22f qui prolonge la première portion 22e en étant incurvée axialement vers l'intérieur à partir du sommet externe S et qui est conçue pour être montée en biais de manière étanche au contact d'une partie axialement interne du bord vertical 12b du vitrage 12 en se terminant vers l'intérieur et en regard de la face interne 12a du vitrage 12 .

Le ou chaque guide 14 est réalisé par exemple en un matériau plastique tel qu'un polyamide, ou un POM ou un PP, voire un autre matériau, et s'étend au moins sur une zone supérieure du bord vertical 12b du vitrage 12.

Le guide 14 est mieux visible à la figure 8, et comprend un corps de forme allongée et présentant une embase 14a s'étendant le long de l'axe A d'allongement du corps et dont une première face, ici externe 14ab, est destinée à être appliquée et fixée sur la surface de vitrage 12a et une seconde face opposée, ici interne 14aa, est destinée à coopérer par glissement avec le joint 10 et en particulier la lèvre 21e, le long de la direction longitudinale du guide, c'est-à-dire sensiblement en direction verticale dans l'exemple représenté.

L'embase 14a est solidaire de la surface de vitrage 12a et s'étend à proximité et le long du bord 12b. Elle a une épaisseur maximale notée Emax (dans la direction Y) et une largeur maximale notée Lmax dans la direction X). La longueur maximale du guide 14 (dans la direction Z) dépend notamment de celle de la vitre 12 à guider.

Le corps du guide 14 comprend en outre une jambe axiale 14b qui prolonge l'embase 14a de manière déportée dans la direction X, contre laquelle appuie le bourrelet 12b (sur la face externe 14bb de la jambe 14b à proximité de son extrémité libre - figure 5).

Comme visible à la figure 5, le guide 14 a en section transversale une forme générale en S dont a portion inférieure est formée par l'embase 14a, ici sensiblement plane et s'étendant sensiblement dans un plan R1, dont la portion supérieure est formée par la jambe 14b, sensiblement plane et s'étendant sensiblement dans un plan R2, et dont une portion intermédiaire de liaison de ces portions inférieure et supérieure, s'étend sensiblement dans un plan R3, incliné par rapport à R1 et R2.

Le guide 14 comprend en outre à l'extrémité libre de sa jambe 14b au moins un crochet axial 14c recourbé axialement vers l'extérieur et destiné à être engagé dans la rainure 22a s'étendant entre le bourrelet 2b et la branche 23 du joint de coulisse 10.

Dans la variante des figure 6 et 7, le joint à coulisse 10' illustré par l'un au moins de ses deux brins ascendants 10b présente les caractéristiques suivantes.

Le joint 10' est entièrement réalisé d'un seul tenant en matériaux élastomères de duretés différentes, et il présente globalement une forme de U asymétrique à deux branches axialement interne 21 et externe 22 qui s'étendent chacune sensiblement dans la direction longitudinale X en section transversale et qui sont reliées entre elles par une branche de liaison 23 axiale formant l'âme du U.

La branche interne 21 est similaire à celle du mode de réalisation de la figure 5, à l'exception du fait que sa portion principale 21a présente deux lèvres d'étanchéité souples 21e et 21f, qui comprennent :
* une lèvre intermédiaire 21e qui s'étend axialement vers l'extérieur et qui est conçue pour appuyer de manière étanche sur une face 14aa orientée vers l'intérieur du guide 14, et
* une lèvre d'extrémité 21f qui est orientée vers l'extérieur et qui prolonge de manière oblique (inclinée vers la branche de liaison 23) l'extrémité de la portion principale 21a et qui est conçue pour appuyer de manière étanche sur la surface interne 12a du vitrage 12 nettement en deçà du guide 14, étant précisé que la jonction entre la portion principale 21a et la lèvre d'extrémité 21f peut former la saillie 21g à section sensiblement en C, qui est destinée à être appliquée sur une extrémité de l'enjoliveur interne 18c équipant le cadre de porte 20.

La branche de liaison 23 est similaire à celle du précédent mode de réalisation.

La branche externe 22 est similaire à celle du précédent mode de réalisation.

La figure 6 montre que le guide 14' comprend à l'extrémité libre de sa jambe 14b au moins un crochet axial 14c recourbé axialement vers l'extérieur et destiné à être engagé dans la rainure 22a s'étendant entre le bourrelet 22b et la branche 23 du joint de coulisse 10.

La figure 7 montre que ce crochet 14c ne s'étend pas sur toute la dimension longitudinale du guide 14, la coupe étant réalisée à distance du ou des crochets 14c.

La figure 7 peut également être considérée comme illustrant une variante de réalisation du guide 14' dépourvu de crochet du type précité. Ce type de guide 14' peut être monté sur la surface de vitrage 12a, le long d'un bord opposé à celui le long duquel s'étend un guide 14 avec crochet 14c.

L'invention s'applique aux guides 14, 14' et joints de coulisse 10, 10' des figures 5 à 7.

Selon l'invention, l'embase 14a du guide 14, 14' comporte à au moins une extrémité longitudinale libre une portion amincie 14d dont l'épaisseur E, dans une direction sensiblement perpendiculaire à la face 14aa, décroît au moins en direction longitudinale (axe A) de façon à ce que la face 14aa affleure la surface de vitrage 12a au niveau de cette extrémité libre (figure 8).

Les figures 8 à 11 notamment permettent de visualiser l'amincissement de l'extrémité libre, ici supérieure, du guide 14, 14' et en particulier de son embase 14a. Comme on le voit dans ces figures, la jambe 14b qui a également une forme allongée le long de l'axe ne s'étend pas jusqu'aux extrémités libres de l'embase. Les extrémités libres supérieures de l'embase 14a et de la jambe 14b sont écartées l'une de l'autre, dans la direction longitudinale ou Y. Autrement dit, la longueur du guide 14, 14' est imposée par la longueur de l'embase 14b, qui est inférieure à la longueur de la jambe 14b.

Dans l'exemple représenté, la jambe 14b comprend au moins deux crochets de retenue 14c au voisinage de ses extrémités longitudinales (figure 8).

La portion amincie 14d du guide 14, 14' a une épaisseur E qui décroît depuis une épaisseur E1 sensiblement égale à l'épaisseur maximale Emax de l'embase, jusqu'à une épaisseur E2.

A titre d'exemple, E1 est comprise entre 1 et 5mm, et de préférence entre 2 et 3mm. Toujours à titre d'exemple, E2 est inférieure à E1/5, et de préférence à E1/10. E2 peut être comprise entre 0,01 et 1mm, et de préférence entre 0,01 et 0,5mm, par exemple.

Dans l'exemple représenté, la portion amincie 14d a une largeur qui décroît en direction longitudinale de façon à ce que ladite extrémité libre ait une largeur plus faible que la largeur maximale Lmax du corps et/ou de l'embase 14a.

Avantageusement, la partie amincie 14d comprend une unique surface de raccordement 14da de la face 14aa à la surface de vitrage 12aa. Cette surface de raccordement 14da est destinée à être au contact de la lèvre 21e et à coopérer par glissement avec cette lèvre lors de son coulissement depuis la face 14aa jusqu'à la surface de vitrage 12a. La surface 14da est donc continue, c'est-à-dire sans arête vive, pour garantir un contact glissant continu de la lèvre 21e.

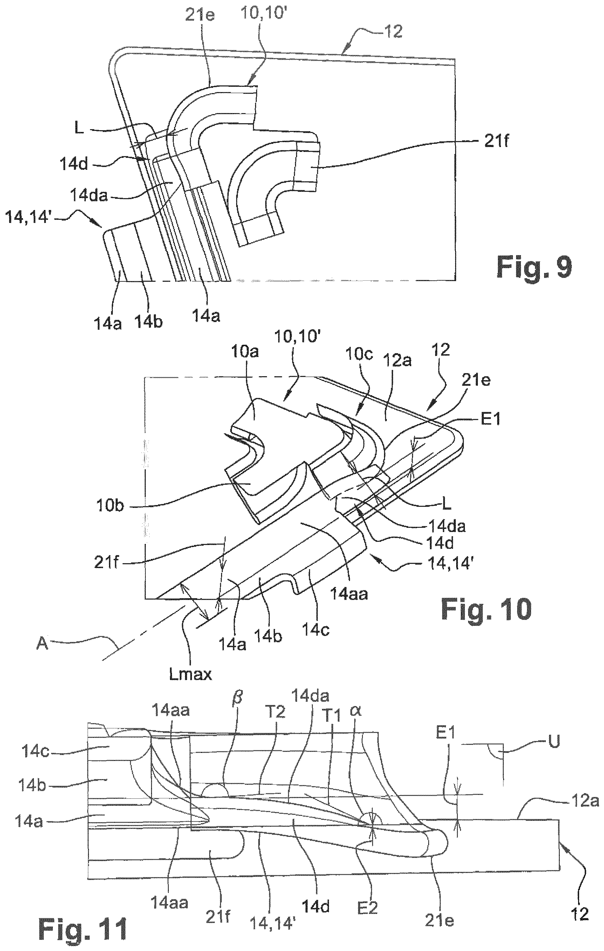

On constate sur la figure 11 que cette surface de raccordement 14da a en section longitudinale une forme légèrement incurvée convexe.

La surface de raccordement 14da comprend une première extrémité longitudinale définissant l'extrémité libre de l'embase 14a, et une seconde extrémité longitudinale opposée raccordée à la face 14aa. L'angle α formé dans un plan U longitudinal sensiblement perpendiculaire à la face 14ab, entre la surface de vitrage 12a et une tangente T1 à la surface de raccordement 14da au niveau de la première extrémité longitudinale, est compris entre 150 et 180°. L'angle β formé dans le même plan U entre la face 14ab et une tangente T2 à la surface de raccordement 14da au niveau de la seconde extrémité longitudinale, est compris entre 180 et 210°.

Le guide 14, 14' est ici formé d'une seule pièce. Il est solidarisé sur la surface de vitrage 12 par collage ou surmoulage. Il peut être fixé sur une surface (interne) sérigraphiée du vitrage pour éviter de pouvoir visualiser le guide à travers le vitrage par une personne extérieure au véhicule.

L'ensemble représenté dans les dessins et comportant le vitrage 12 coulissant équipé du guide 14, 14' et le joint de coulisse 10, 10', fonctionne de la façon suivante.

En position basse ou rentrée, le vitrage coulissant est situé à l'intérieur de la porte et son guide 14, 14' peut être à distance du joint de coulisse et en particulier de la lèvre 21e. Lors du déplacement du vitrage, la lèvre glisse sur la surface 12a du vitrage jusqu'à ce qu'elle entre au contact de la portion amincie 14d du guide. Du fait de l'affleurement précité et de la faible marche ou non marche entre la portion amincie 14d et la surface du vitrage, la lèvre glisse sur la surface 14da de la portion amincie sans difficulté et sans générer de jeu avec la surface de vitrage 12a. A mesure que le vitrage coulisse, la lèvre 21e glisse sur les faces 14da et 14aa, jusqu'à ce que la portion amincie 14d arrive au niveau du raccord moulé 10c entre les brins 10a, 10b du joint de coulisse 10. Dans cette position, la lèvre 21a est située au niveau du raccord moulé 10c, comme illustré à la figure 10, et peut passer de la surface de raccordement 14da à la surface de vitrage 12a en passant en direction axiale X. Avantageusement, la portion amincie 14d a également une épaisseur qui décroît également en direction transversale, de façon à ne pas non plus avoir de marche et donc de jeu en direction transversale entre la lèvre 21e et le guide, d'une part, et entre la lèvre 21e et la surface de vitrage 12a, d'autre part.

Bien que le vitrage soit équipé de deux guides dans les exemples représentés, un seul peut suffire. De plus, au global, pour un vitrage mobile, seul un guide nécessite de présenter au moins un crochet, tandis que les portions amincies sont préconisées pour les deux guides.

L'invention permet de supprimer la « marche » de la technique antérieure et donc de garantir un contact continu et donc une étanchéité constante entre le joint et le guide et entre le joint et la surface de vitrage en particulier à l'extrémité libre du guide, le tout dans un environnement le plus réduit possible (en direction axiale X en particulier). Ceci est rendu possible par un amincissement du guide, qui permet une liaison optimale des surfaces d'appui et de glissement du joint sur le guide et la surface de vitrage.

Il est important de noter que les lèvres 21e, 21f visibles aux figures 9 à 11 sont représentées dans leur état libre sans contrainte. Elle apparaissent en partie à l'intérieur du vitrage mais il doit naturellement être considéré qu'elles sont destinées à prendre appui sur la surface de vitrage 12a dans un état comprimé ou contraint et à coopérer par glissement respectivement sur la surface de vitrage 12a pour la lèvre 21f, et la face 14aa et la surface de vitrage 12a pour la lèvre 21e.

## Revendications

1. Guide (14, 14') de vitrage coulissant (12), en particulier pour automobile, ledit guide étant destiné à être rapporté et fixé sur un vitrage et à coopérer avec un joint de coulisse (10, 10'), ledit guide comportant un corps de forme allongée et présentant une embase longitudinale (14a) s'étendant le long de l'axe (A) d'allongement du corps et dont une première face (14ab) est destinée à être appliquée et fixée sur une surface de vitrage (12a) et une seconde face (14aa) opposée est destinée à coopérer par glissement avec ledit joint, ladite embase longitudinale comportant à au moins une extrémité longitudinale libre une portion amincie (14d) dont l'épaisseur (E), dans une direction sensiblement perpendiculaire à ladite première face, décroît au moins en direction longitudinale, **caractérisé en ce que** l'épaisseur (E) décroit de façon à ce que ladite seconde face affleure ladite surface de vitrage au niveau de ladite au moins une extrémité libre.

2. Guide (14, 14') selon la revendication précédente, dans lequel ladite portion amincie (14d) a une épaisseur qui décroît depuis une épaisseur E1 sensiblement égale à l'épaisseur maximale de ladite embase, jusqu'à une épaisseur E2.

3. Guide (14, 14') selon la revendication précédente, dans lequel E1 est comprise entre 1 et 5mm, et de préférence entre 2 et 3mm.

4. Guide (14, 14') selon la revendication 2 ou 3, dans lequel E2 est inférieure à E1/5, et de préférence à E1/10.

5. Guide (14, 14') selon la revendication précédente, dans lequel E2 est comprise entre 0,01 et 1mm, et de préférence entre 0,01 et 0,5mm.

6. Guide (14, 14') selon l'une des revendications précédentes, dans lequel ladite portion amincie (14d) a une largeur (L) qui décroît en direction longitudinale de façon à ce que ladite extrémité libre ait une largeur plus faible que la largeur maximale (Lmax) du corps et/ou de ladite embase longitudinale (14a).

7. Guide (14, 14') selon l'une des revendications précédentes, dans lequel ladite portion amincie (14d) a une épaisseur qui décroît également en direction transversale.

8. Guide (14, 14') selon l'une des revendications précédentes, dans lequel ladite partie amincie (14d) comprend une unique surface de raccordement (14da) de ladite seconde face (14ab) à ladite surface de vitrage (12a).

9. Guide (14, 14') selon la revendication précédente, dans lequel ladite surface de raccordement (14da) a en section longitudinale une forme légèrement incurvée convexe.

10. Guide (14, 14') selon la revendication 8 ou 9, dans lequel ladite surface de raccordement (14da) comprend une première extrémité longitudinale définissant ladite extrémité libre, et une seconde extrémité longitudinale raccordée à ladite seconde face (14aa),
l'angle α formé dans un plan longitudinal (U) sensiblement perpendiculaire à ladite première face (14ab), entre ladite surface de vitrage (12a) et une tangente (T1) à ladite surface de raccordement au niveau de ladite première extrémité longitudinale, étant compris entre 150 et 180°, et/ou l'angle β formé dans le même plan entre ladite seconde face et une tangente à ladite surface de raccordement au niveau de ladite seconde extrémité longitudinale, étant compris entre 180 et 210°.

11. Guide (14, 14') selon l'une des revendications précédentes, dans lequel ledit corps comprend en outre une jambe longitudinale (14b) reliée à ladite embase (14a) et destinée à s'étendre à distance dudit vitrage (12).

12. Guide (14, 14') selon la revendication précédente, dans lequel ladite jambe (14b) s'étend sur une partie seulement de la dimension longitudinale de ladite embase (14a).

13. Guide (14, 14') selon la revendication 11 ou 12, dans lequel ladite portion amincie (14d) est écartée longitudinalement de ladite jambe (14b).

14. Guide (14, 14') selon l'une des revendications 11 à 13, dans lequel ladite jambe (14b) comprend au moins un crochet de retenue (14c).

15. Guide (14, 14') selon l'une des revendications précédentes, dans lequel ledit corps est formé d'une seule pièce.

16. Vitrage coulissant équipé, en particulier automobile, comportant un vitrage coulissant (12) et au moins un guide (14, 14') selon l'une des revendications précédentes.

17. Vitrage coulissant équipé selon la revendication précédente, dans lequel ledit guide (14, 14') est solidarisé au vitrage (12) par collage ou surmoulage.

18. Vitrage coulissant équipé selon la revendication 15 ou 16, dans lequel ledit guide (14, 14') est fixé sur une surface sérigraphiée dudit vitrage (12).

19. Ensemble comportant un vitrage coulissant équipé selon l'une des revendications 16 à 18 et un joint de coulisse (10, 10'), ledit joint comportant une lèvre (21e) flexible de forme allongée dont l'axe d'allongement s'étend sensiblement parallèlement audit axe d'allongement (A) dudit corps, ladite lèvre étant en appui sur ladite seconde face (14aa) et apte à glisser en direction longitudinale sur ladite seconde face ainsi que sur ladite surface de vitrage (12a) en maintenant un contact sensiblement continu avec celles-ci.

20. Module comportant un ensemble selon la revendication précédente et un enjoliveur (18) d'un cadre de porte de véhicule automobile, ledit enjoliveur comportant une face externe destinée à être sensiblement alignée avec une face externe dudit vitrage (12).

21. Module selon la revendication précédente, dans lequel ledit enjoliveur (18) comporte deux rebords (18d, 18aa) orientés vers l'intérieur et sensiblement perpendiculaires à ladite face externe, dont un premier rebord (18d) est engagé dans une rainure (22bb) d'une branche externe (22) du joint de coulisse (10, 10') et dont un second rebord (18aa) sert d'appui à une branche intermédiaire (23) du joint de coulisse.

## Patentansprüche

1. Führung (14, 14') einer Schiebeglasscheibe (12), insbesondere für ein Kraftfahrzeug, wobei die Führung dazu vorgesehen ist, an einer Glasscheibe angestückt und befestigt zu werden und mit einer Schiebedichtung (10, 10') zusammenzuwirken, wobei die Führung einen Körper mit langgestreckter Form umfasst und eine Längsbasis (14a) aufweist, die sich entlang der Verlängerungsachse (A) des Körpers erstreckt und bei der eine erste Seite (14ab) dazu vorgesehen ist, an einer Glasscheibenoberfläche (12a) angebracht und befestigt zu werden, und eine zweite, gegenüberliegende Seite (14aa) dazu vorgesehen ist, durch Gleiten mit der Dichtung zusammenzuwirken, wobei die Längsbasis an mindestens einem freien Längsende einen verjüngten Abschnitt (14d) umfasst, dessen Dicke (E) in einer im Wesentlichen zur ersten Seite senkrechten Richtung mindestens in Längsrichtung abnimmt, **dadurch gekennzeichnet, dass** die Dicke (E) derart abnimmt, dass die zweite Seite am mindestens einen freien Ende mit der Glasscheibenoberfläche bündig ist.

2. Führung (14, 14') nach dem vorstehenden Anspruch, wobei der verjüngte Abschnitt (14d) eine Dicke besitzt, die ab einer Dicke E1, die im Wesentlichen gleich der Höchstdicke der Basis ist, bis zu einer Dicke E2 abnimmt.

3. Führung (14, 14') nach dem vorstehenden Anspruch, wobei E1 zwischen 1 und 5 mm, und vorzugsweise zwischen 2 und 3 mm beträgt.

4. Führung (14, 14') nach Anspruch 2 oder 3, wobei E2 kleiner als E1/5, und vorzugsweise als E1/10 ist.

5. Führung (14, 14') nach dem vorstehenden Anspruch, wobei E2 zwischen 0,01 und 1 mm, und vorzugsweise zwischen 0,01 und 0,5 mm beträgt.

6. Führung (14, 14') nach einem der vorstehenden Ansprüche, wobei der verjüngte Abschnitt (14d) eine Breite (L) besitzt, die derart in Längsrichtung abnimmt, dass das freie Ende eine geringere Breite besitzt als die Höchstbreite (Lmax) des Körpers und/oder der Längsbasis (14a).

7. Führung (14, 14') nach einem der vorstehenden Ansprüche, wobei der verjüngte Abschnitt (14d) eine Dicke besitzt, die ebenfalls in Querrichtung abnimmt.

8. Führung (14, 14') nach einem der vorstehenden Ansprüche, wobei der verjüngte Abschnitt (14d) eine einzige Anschlussoberfläche (14da) der zweiten Seite (14ab) an die Glasscheibenoberfläche (12a) umfasst.

9. Führung (14, 14') nach dem vorstehenden Anspruch, wobei die Anschlussoberfläche (14da) im Längsschnitt eine leicht gekrümmte konvexe Form besitzt.

10. Führung (14, 14') nach Anspruch 8 oder 9, wobei die Anschlussoberfläche (14da) ein erstes Längsende umfasst, das das freie Ende definiert, und ein zweites Längsende, das an die zweite Seite (14aa) angeschlossen ist,
wobei der Winkel a, in einer Längsebene (U), die im Wesentlichen senkrecht zur ersten Seite (14ab) ist, zwischen der Glasscheibenoberfläche (12a) und einer Tangente (T1) zur Anschlussoberfläche am ersten Längsende gebildet, zwischen 150 und 180 ° beträgt, und/oder
wobei der Winkel β, in derselben Ebene zwischen der zweiten Seite und einer Tangente zur Anschlussoberfläche am zweiten Längsende gebildet, zwischen 180 und 210 ° beträgt.

11. Führung (14, 14') nach einem der vorstehenden Ansprüche, wobei der Körper weiter ein Längsbein (14b) umfasst, das mit der Basis (14a) verbunden ist und dazu vorgesehen ist, sich beabstandet von der Glasscheibe (12) zu erstrecken.

12. Führung (14, 14') nach dem vorstehenden Anspruch, wobei das Bein (14b) sich nur über ein Teil der Längsabmessung der Basis (14a) erstreckt.

13. Führung (14, 14') nach Anspruch 11 oder 12, wobei der verjüngte Abschnitt (14d) längsgerichtet vom Bein (14b) entfernt ist.

14. Führung (14, 14') nach einem der Ansprüche 11 bis 13, wobei das Bein (14b) mindestens einen Rückhaltehaken (14c) umfasst.

15. Führung (14, 14') nach einem der vorstehenden Ansprüche, wobei der Körper aus einem einzelnen Stück gebildet ist.

16. Ausgestattete Schiebeglasscheibe, insbesondere eines Kraftfahrzeugs, die eine Schiebeglasscheibe (12) und mindestens eine Führung (14, 14') nach einem der vorstehenden Ansprüche umfasst.

17. Ausgestattete Schiebeglasscheibe nach dem vorstehenden Anspruch, wobei die Führung (14, 14') durch Verkleben oder Umspritzen fest mit der Glasscheibe (12) verbunden ist.

18. Ausgestattete Schiebeglasscheibe nach Anspruch 15 oder 16, wobei die Führung (14, 14') auf einer mit Siebdruck versehenen Oberfläche der Glasscheibe (12) befestigt ist.

19. Baugruppe, umfassend eine ausgestattete Schiebeglasscheibe nach einem der Ansprüche 16 bis 18 und eine Schiebedichtung (10, 10'), wobei die Dichtung eine bewegliche Lippe (21e) mit länglicher Form umfasst, deren Verlängerungsachse sich im Wesentlichen parallel zur Verlängerungsachse (A) des Körpers erstreckt, wobei die Lippe auf der zweiten Seite (14aa) aufliegt und dazu angepasst ist, sich in Längsrichtung auf der zweiten Seite sowie auf der Glasscheibenoberfläche (12a) bei im Wesentlichen kontinuierlichem Kontakthalten mit diesen zu verschieben.

20. Modul, umfassend eine Baugruppe nach dem vorstehenden Anspruch und eine Zierleiste (18) eines Kraftfahrzeugtürrahmens, wobei die Zierleiste eine äußere Seite umfasst, die dazu vorgesehen ist, im Wesentlichen nach einer äußeren Seite der Glasscheibe (12) ausgerichtet zu sein.

21. Modul nach dem vorstehenden Anspruch, wobei die Zierleiste (18) zwei Ränder (18d, 18aa) umfasst, die nach innen gerichtet sind und im Wesentlichen senkrecht zur äußeren Seite sind, bei denen ein erster Rand (18d) in eine Nut (22bb) eines äußeren Schenkels (22) der Schiebedichtung (10, 10') eingreift und bei denen ein zweiter Rand (18aa) einem Zwischenschenkel (23) der Schiebedichtung als Auflage dient.

## Claims

1. Guide (14, 14') for sliding glazing (12), in particular for an automobile, said guide being intended to be added and fastened onto a glazing and to cooperate with a sliding joint (10, 10'), said guide comprising a body of elongated shape and having a longitudinal base (14a) extending along the axis (A) of elongation of the body and of which a first face (14ab) is intended to be applied and fastened onto a glazing surface (12a) and an opposite second face (14aa) is intended to cooperate by sliding with said joint, said longitudinal base comprising at at least one free longitudinal end a thinned portion (14d) of which the thickness (E), in a direction substantially perpendicular to said first face, decreases at least in the longitudinal direction, **characterised in that** the thickness (E) decreases in such a way that said second face is flush with said glazing surface on said at least one free end.

2. Guide (14, 14') according to the preceding claim, wherein said thinned portion (14d) has a thickness that decreases from a thickness E1 substantially equal to the maximum thickness of said base, to a thickness E2.

3. Guide (14, 14') according to the preceding claim, wherein E1 is between 1 and 5 mm, and preferably between 2 and 3 mm.

4. Guide (14, 14') according to claim 2 or 3, wherein E2 is less than E1/5, and preferably less than E1/10.

5. Guide (14, 14') according to the preceding claim, wherein E2 is between 0.01 and 1 mm, and preferably between 0.01 and 0.5 mm.

6. Guide (14, 14') according to one of the preceding claims, wherein said thinned portion (14d) has a width (L) that decreases in the longitudinal direction in such a way that said free end has a width less than the maximum width (Lmax) of the body and/or of said longitudinal base (14a).

7. Guide (14, 14') according to one of the preceding claims, wherein said thinned portion (14d) has a thickness that also decreases in the transversal direction.

8. Guide (14, 14') according to one of the preceding claims, wherein said thinned portion (14d) comprises a single connection surface (14da) of said second face (14ab) to said glazing surface (12a).

9. Guide (14, 14') according to the preceding claim, wherein said connection surface (14da) has in the longitudinal section a convex slightly curved shape.

10. Guide (14, 14') according to claim 8 or 9, wherein said connection surface (14da) comprises a first longitudinal end that defines said free end, and a second longitudinal end connected to said second face (14aa),
the angle α formed in a longitudinal plane (U) substantially perpendicular to said first face (14ab), between said glazing surface (12a) and a tangent (T1) to said connection surface on said first longitudinal end, being between 150 and 180°, and/or
the angle β formed in the same plane between said second face and a tangent to said connection surface on said second longitudinal end, being between 180 and 210°.

11. Guide (14, 14') according to one of the preceding claims, wherein said body further comprises a longitudinal leg (14b) connected to said base (14a) and intended to extend at a distance from said glazing (12).

12. Guide (14, 14') according to the preceding claim, wherein said leg (14b) extends over only a portion of the longitudinal dimension of said base (14a).

13. Guide (14, 14') according to claim 11 or 12, wherein said thinned portion (14d) is separated longitudinally from said leg (14b).

14. Guide (14, 14') according to one of claims 11 to 13, wherein said leg (14b) comprises at least one retaining hook (14c).

15. Guide (14, 14') according to one of the preceding claims, wherein said body is formed from a single part.

16. Equipped sliding glazing, in particular automobile, comprising a sliding glazing (12) and at least one guide (14, 14') according to one of the preceding claims.

17. Equipped sliding glazing according to the preceding claim, wherein said guide (14, 14') is made integral with the glazing (12) by gluing or overmoulding.

18. Equipped sliding glazing according to claim 15 or 16, wherein said guide (14, 14') is fastened onto a screen-printed surface of said glazing (12).

19. Assembly comprising an equipped sliding glazing according to one of claims 16 to 18 and a sliding joint (10, 10'), said joint comprising a flexible lip (21e) of elongated shape of which the axis of elongation extends substantially parallel to said axis of elongation (A) of said body, said lip bearing on said second face (14aa) and able to slide in the longitudinal direction on said second face as well as on said glazing surface (12a) by maintaining a substantially continuous contact with the latter.

20. Module comprising an assembly according to the preceding claim and a trim (18) of a motor vehicle door frame, said trim comprising an outer face intended to be substantially aligned with an outer face of said glazing (12).

21. Module according to the preceding claim, wherein said trim (18) comprises two rims (18d, 18aa) oriented inwards and substantially perpendicular to said outer face, of which a first rim (18d) is engaged in a groove (22bb) of an outer branch (22) of the sliding joint (10, 10') and of which a second rim (18aa) is used as a support for an intermediate branch (23) of the sliding joint.
